# EUROPÄISCHE PATENTANMELDUNG

(11) **EP 0 838 709 A2**
(43) Veröffentlichungstag der Anmeldung: **29.04.1998**
(21) Anmeldenummer: 97115928.0
(22) Anmeldetag: 12.09.1997
(51) Int. Cl.: G02B 27/09

(54) **Anordnung zur Erzeugung einer Umsetzung zwischen Lichtstrahlen kleineren Strahlquerschnitts und einem Lichtstrahl grösseren Strahlquerschnitts**

(30) Priorität: 30.09.1996 DE 19640253
(71) Anmelder: SIEMENS AKTIENGESELLSCHAFT, 80333 München (DE)
(72) Erfinder: Schneider, Hartmut, Dr., 81927 München (DE)

(57) **Zusammenfassung**

Bei der Anordnung ist jedem Lichtstrahl (L1) kleineren Strahlquerschnitts eine längliche Kernendfläche (10) je eines Wellenleiterkerns (1) zugeordnet. Die anderen länglichen Kernendflächen (11) der Kerne sind dem Lichtstrahl (L) größeren Strahlquerschnitts zugeordnet. Erfindungsgemäß sind die Kerne je in Form eines Bisphenoids ausgebildet, so daß die einen und anderen Kernendflächen in zueinander senkrechten Richtungen (r0, r1) länglich sind.

## Beschreibung

Die Erfindung betrifft eine Anordnung zur Erzeugung einer Umsetzung mehrerer Lichtstrahlen jeweils kleineren Strahlquerschnitts in einen Lichtstrahl eines größeren Strahlquerschnitts und/oder einer Umsetzung des Lichtstrahls größeren Strahlquerschnitts in die mehreren Lichtstrahlen jeweils kleineren Strahlquerschnitts nach dem Oberbegriff des Patentanspruchs 1.

Eine Anordnung der genannten Art ist aus der DE-A-19 612 673 (GR 96 P 1328 DE) bekannt. Bei dieser bekannten Anordnung sind die den Lichtstrahlen jeweils kleineren Strahlquerschnitts zugeordneten länglichen Kernendflächen mit Abstand nebeneinander auf der den Wellenleiternkernen gemeinsam zugeordneten Ebene angeordnet. Die dem Lichtstrahl größeren Strahlquerschnitts zugeordneten Kernendflächen, deren jede in Richtung parallel zu der den Wellenleiternkernen gemeinsam zugeordneten Ebene langgestreckt ist, sind in verschiedenen, zu dieser Ebene parallelen und in Richtung senkrecht zu dieser mit Abstand übereinander angeordneten Ebenen übereinandergestapelt angeordnet.

Aus Chen W. Q. et al.: "Design Approaches for Laser-Diode Material-Processing Systems Using Fibers and Micro-Optics", Optical Engineering, 33 (1994), Seiten 3662 bis 3669 ist eine Anordnung bekannt, die aus einem Bündel optischer Kern-Mantel-Glasfasern mit jeweils kreisförmigen und von einem optischen Mantel umgenbenen Kernendflächen besteht, wobei die den mehreren Lichtstrahlen jeweils kleineren Strahlquerschnitts zugeordneten Kernendflächen in einer den Fasern gemeinsam zugeordneten Ebene angeordnet sind, während die dem Lichtstrahl größeren Strahlquerschnitts zugeordneten Kernendflächen in einer durch kreisförmige Bündelung der Fasern bestimmten Kreisfläche angeordnet sind, so daß diese Kernendflächen in verschiedenen, zu der den Fasern gemeinsam zugeordneten Ebene parallelen und in Richtung senkrecht zu dieser Ebene mit Abstand übereinander angeordneten Ebenen angeordnet sind.

Aus Yamaguchi S. et al.: 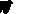 Collimation of Emissions from a High Power Multistripe Laser-Diode Bar with Multiprism Array Coupling and Focusing to a Small Spot", Optics Letters, 20 (1995), Seiten 898 bis 900 ist es bekannt, mehrere Lichtstrahlen jeweils kleineren Strahlquerschnitts mit Hilfe eines Mikroprismas um 90° zu drehen, so daß diese Lichtstrahlen über eine Reihe von Prismen zu einem Lichtstrahl mit einem rechteckförmigen größeren Strahlquerschnitt zusammengefaßt werden können.

Bei der im Anspruch 1 angegebenen erfindungsgemäßen Anordnung können vorteilhafterweise die dem Lichtstrahl größeren Strahlquerschnitts zugeordneten Kernendflächen parallel zu der den Wellenleiterkernen gemeinsam zugeordneten Ebene nebeneinander angeordnet sein, so daß eine Anordnung dieser Kernendflächen in verschiedenen Ebenen, die zu der den Wellenleiterkernen gemeinsam zugeordneten Ebene parallel und senkrecht zu dieser Ebene mit Abstand übereinander angeordnet sind, vermieden werden kann.

Bei der erfindungsgemäßen Anordnung ist jeder Wellenleiterkern so ausgebildet, daß ein Lichtstrahl kleineren Strahlquerschnitts, der durch eine der beiden Kernendflächen in den Kern eingekoppelt wird und dessen Strahlquerschnitt in der gleichen Richtung wie diese Kernendfläche langgestreckt ist, nach Durchgang durch den Kern aus der anderen Kernendläche als ein Lichtstrahl mit einem Strahlquerschnitt ausgekoppelt wird, der wie die andere Kernendfläche in der anderen Richtung langgestreckt ist.

Der Lichtstrahl größeren Strahlquerschnitts besteht aus der Gesamtheit der Lichtstrahlen, die aus den dem Lichtstrahl größeren Strahlquerschnitts zugeordneten Kernendflächen sämtlicher Wellenleiterkerne austreten und jeweils einen Strahlquerschnitt aufweisen, der in einer anderen Richtung als die den Lichtstrahlen jeweils kleineren Strahlquerschnitts zugeordneten Kernendflächen langgestreckt ist.

Auf diese Weise kann trotz einer Nebeneinanderanordnung der dem Lichtstrahl größeren Strahlquerschnitts zugeordneten Kernendflächen parallel zu der den Wellenleiterkernen zugeordneten Ebene ein größerer Strahlquerschnitt erhalten werden, der in der Richtung senkrecht zu dieser Ebene einen größeren Durchmesser aufweist.

Damit sich in einem Wellenleiterkern von einer Kernendfläche zur anderen eine Modenmischung ohne unzulässigen Leistungsverlust ergibt, ist es notwendig, daß sich der Kernquerschnitt jedes Wellenleiterkerns entlang seiner Kernlängsachse im wesentlichen stufenlos von der geometrischen Form einer Kernendfläche in die geometrische Form der anderen Kernendfläche ändert.

Um einen Lichtstrahl eines möglichst kompakten größeren Strahlquerschnitts zu erhalten, ist es zweckmäßig, wenn die dem Lichtstrahl größeren Strahlquerschnitts zugeordneten Kernendflächen der Wellenleiterkerne in einer den Wellenleiterkernen gemeinsam zugeordneten Richtung langgestreckt sind (Anspruch 2), die vorzugsweise senkrecht zur der den Wellenleiterkernen gemeinsam zugeordneten Ebene ist.

Je dichter die dem Lichtstrahl größeren Strahlquerschnitts zugeordneten Kernendflächen der Wellenleiterkerne zueinander angeordnet sind, desto kompakter wird der Strahlquerschnitt dieses Lichtstrahls.

Ein Lichtstrahl mit lückenlosem größerem Strahlquerschnitt kann erhalten werden, wenn gemäß Anspruch 3 die dem Lichtstrahl größeren Strahlquerschnitts zugeordneten Kernendflächen der Wellenleiterkerne zusammen in einer zur gemeinsamen Ebene senkrechten Anordnungsebene in einer zu der den Wellenleiterkernen gemeinsam zugeordneten Ebene parallelen Richtung lückenlos aufeinandnerfolgend angeordnet sind (Anspruch 3).

Obgleich nicht notwendig ist es jedoch in vielen Fällen zweckmäßig, wenn die dem Lichtstrahl größeren Strahlquerschnitts zugeordnete Kernendfläche jedes Wellenleiterkerns senkrecht zur Kernlängsachse dieses Wellenleiterkerns angeordnet ist (Anspruch 4), da dann keine strahlablenkende Brechung an dieser Kernendfläche auftritt und diese Kernendfläche an eine Endfläche eines weiterführenden optischen Wellenleiters, beispielsweise einer optischen Fasern stoßgekoppelt werden kann.

Eine besonders vorteilhafte Ausgestaltung einer erfindungsgemäßen Anorndung ist gemäß Anspruch 5 so ausgebildet, daß die den Lichtstrahlen kleineren Strahlquerschnitts zugeordneten Kernendflächen der Wellenleiterkerne mit im Vergleich zu den dem Lichtstrahl größeren Strahlquerschnitts größerem Abstand voneinander angeordnet sind, und daß die Kernlängsachsen und mit ihnen die Wellenleiterkerne zwischen ihren Kernendflächen derart gekrümmt verlaufen, daß die Kernlängsachsen an den dem Lichtstrahl größeren Strahlquerschnitts zugeordneten Kernendflächen und/oder an den den Lichtstrahlen kleineren Strahlquerschnitts zugeordneten Kernendflächen parallel zueinander sind.

Wenn in diesem Fall die dem Lichtstrahl größeren Strahlquerschnitts zugeordneten Kernendflächen der Wellenleiterkerne senkrecht zu den Kernlängsachsen sind, tritt dieses Lichtstrahl größeren Strahlquerschnitts vorteilhafterweise achsparallel zu diesen Kernlängsachsen aus diesen zueinander parallelen Kernendflächen aus.

Andererseits kann jeder Lichtstrahl kleineren Strahlquerschnitts achsparallel zur Kernlängsachse des betreffenden Wellenleiterkerns durch die diesem Lichtstrahl zugeordnete Kernendfläche dieses Wellenleiterkerns eintreten, wenn diese Kernendfläche senkrecht zur Achse ist (Anspruch 6).

Im Hinblick auf die Modenmischung in einem Kern ist es zweckmäßig, wenn gemäß Anspruch 7 der Kernquerschnitt eines Wellenleiterkerns entlang der Kernlängsachse eine im wesentlichen konstant bleibende Querschnittsfläche aufweist, wobei eine bevorzugte Ausgestaltung eines solchen Wellenleiterkerns gemäß Anspruch 8 so ausgebildet ist, daß die beiden Kernendflächen dieses Wellenleiterkerns jeweils im wesentlichen langgestreckt rechteckförmig sind, und der Kernquerschnitt dieses Wellenleiterkerns entlang seiner Kernlängsachse im wesesntlichen rechteckförmig bleibt.

Zur Erleichterung der Modenmischung in einem Kern ist es gemäß Anspruch 9 vorteilhaft, wenn an dem Wellenleiterkern eine Einrichtung zur Erleichterung einer Modenmischung im Wellenleiterkern vorgesehen ist. Eine solche Einrichtung zur Erleichterung der Modenmischung kann auf die verschiedenste Weise gestaltet sein. Bervorzugte und vorteilhafte Ausgestaltungen sind in der späteren Beschreibung angegeben.

Eine erfindungsgemäße Anordnung wird vorteilhafterweise zur Erzeugung einer Umsetzung mehrerer Lichtstrahlen jeweils kleineren Strahlquerschnitts in einen Lichtstrahl eines größeren Strahlquerschnitts verwendet und ist für diesen Zweck bevorzugterweise so ausgebildet, daß jeder der mehreren Lichtstrahlen des jeweils kleineren Strahlquerschnitts von je einer in Richtung parallel zu der den Wellenleiterkernen gemeinsam zugeordneten Ebene sich erstreckenden Zeile aus nebeneinander angeordneten Halbleiterlichtquellen erzeugt und durch die diesem Lichtstrahl kleineren Strahlquerschnitts zugeordnete Kernendfläche des diesem Lichtstrahl zugeordneten Wellenleiterkerns eingekoppelt ist, und daß die dem Lichtstrahl des größeren Strahlquerschnitts zugeordneten und in der anderen Richtung langgestreckten Kernendflächen der diesem Lichtstrahl zugeordneten Wellenleiterkerne derart in ihrer Länge bemessen und derart zueinander eng benachbart angeordnet sind, daß sie im wesentlichen in den Kernquerschnitt des Wellenleiterkerns eines Multimodewellenleiters, beispielsweise eine optsche Faser, passen und daß der aus diesen Kernendflächen der Wellenleiterkerne gemeinsame ausgekoppelte Lichtstrahl des größeren Strahlquerschnitts in der Multimodewellenleiter eingekoppelt ist (Anspruch 10).

Die Halbleiterlichtquellen sind bevorzugterweise Halbleiterlaser, die kompakte Lichtquellen mit hoher Strahlungsdichte sind und sich in vielfältiger Weise praktisch nutzen lassen. Beispielsweise können Halbleiterlaser, bei denen das Laserlicht von einem strichförmigen Lichtfleck abgestrahlt wird, derart in geringem Abstand von beispielsweise 10 µm voneinander in der Zeile angeordnet werden, daß die strichförmigen Lichtflecke parallel zueinander und vorzugsweise senkrecht zu der den Wellenleiterkernen gemeinsam zugeordnetne Ebene angeordnet sind. Derartige Einzelarrays aus Halbleiterlasern können gemeinsam einen Lichtstrahl kleineren Strahlquerschnitts von 1 bis 2 Watt Lichtleistung abstrahlen. Wird jedem der zwei oder mehreren Wellenleiterkerne je ein solches Einzelarray zugeordnet, läßt sich eine Leistungssteigerung erzielen, die vorteilhafterweise zur Materialbearbeitung ausreicht, wenn die von diesen Einzelarrays erzeugten Lichtstrahlen jeweils kleineren Strahlquerschnitts durch die Anordnung nach Anspruch 10 in einem Lichtstrahl relativ größeren Querschnitts konzentriert wird. Typsicherweise ist der linienförmige Lichtfleck jedes Halbleiterlasers des Einzelarrays 1 bis 2 µm hoch und die ddurch das Einzelarrray gegebene Zeile etwa 200 µm lang. Das Einzelarray strahlt in einen Raumwinkel ab, der senkrecht zur gemeinsamen Ebene einen größeren Öffnungswinkel, beispielsweise 30 bis 40°, aufweist als parallel zu dieser Ebene, in der dieser Öffnungswinkel beispielsweise 5 bis 10° beträgt. Mit der erfindungsgemäßen Vorrichtung, insbesondere in der Ausführungsform nach Figur 10 kann vorteilhafterweise die von sämtlichen Einzelarrays abgestrahlte optische Leistung ohne Verlust an Leistung und an Leistungsdichte in beispielsweise die Faser eingekoppelt werden.

Eine erfindungsgemäße Anordnung läßt sich vorteilhafterweise besonders kostengünstig ausschließlich mit Methoden der Planartechnik herhstellen und ist als monolithisches Bauteil in Unterschied zu Faserbündeln besonders robust, wobei eine hohe optische Leistungsdichte erreichbar ist. Bei Realisierung in Planartechnik ist die erfindungsgemäße Anordnung bevorzugterweise so ausgebilldet, daß die den Wellenleiterkernen gemeinsam zugeordnete Ebene durch eine Oberfläche eines Substrats definiert ist, auf der diese Wellenleiterkerne ausgebildet sind (Anspruch 11).

Zur Herstellung dieser Anordnung nach Anspruch 11 ist vorteilhafterweise das im Anspruch 12 angegebene Verfahren geeignet.

Dieses Verfahren setzt allerdings ein Verfahren zur Herstellung einer Schicht auf einer Oberfläche eines Substrats mit einem eine sich ändernde Schichtdicke aufweisenden vorbestimmten Schichtdickenprofil voraus. Ein erfindungsgemäßes Verfahren zur Herstellung einer derartigen Schicht, das sich nicht auf Schichten nach Anspruch 12 beschrankt, sondern generell dort verwendbar ist, wo solche Schichten zu irgendwelchen Zwecken benötigt werden, verwendbar ist, geht aus dem Anspruch 13 hervor. Es sei in diesem Zusammenahng darauf hingewiesen, daß aus M. Kawachi: 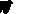 Silica waveguides on silicon and their application to integrated-optic components", Optical and Quantum Electronics, 22, 1990, Seiten 391 bis 416 und/oder H. W. Schneider: 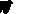 Realization of SiO₂-B₂O₃-TiO₂ Waveguides and Reflectors on Si Substrates" in 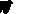 Optical Waveguide Materials", edited by M. M. Broer, R. Th. Kersten, G. H. Sigel and H. Kawazoe, Materials Research Society Symposium Proceedings, Vol. 244, 1992, Seiten 337 bis 342 bereits ein Verfahren hervorgeht, das im wesentlichen die Merkmale dieses Anspruchs 13 aufweist, jedoch nur zur Herstellung einer Schicht auf einer Oberfläche eines Substrats mit einer konstanten Schichtdicke, nicht jedoch mit einem eine sich ändernde Schichtdicke aufweisenden vorbestimmten Schichtdickenprofil verwendet worden ist.

Bevorzugte und vorteilhafte Ausgestaltungen des Verfahrens nach Anspruch 13 gehen aus den Ansprüchen 14 bis 18 hervor.

Durch die erfindungungsgemäße Anordnung ist vorteilhafterweise ein strahlumformendes Element bereitgestellt, das besonders kostengünstig ausschließlich mit Methoden der Planartechnik herstellbar ist und das als monolithisches Bauteil im Unterschied zu Faserbündeln besonders robust ist. Ein weiterer Vorteil ist die mit diesem Element erreichbare hohe Leistungsdichte. Die erfindungungsgemäße Anordnung kann auch umgekehrt betrieben werden, d.h. zur Erzeugung mehrerer getrennter Lichtstrahlen jeweils kleineren Strahlqerschnitts aus einem Lichtstrahl größeren Strahlquerschnitts.

Die Erfindung wird in der nachfolgenden Beshreibung anhand der Figuren beispielhaft näher erläutert. Es zeigen:
- Figur 1: in schematischer perspektivischer Darstellung beispielhaft den Prinzipaufbau einer erfindungsgemäßen Anordnung,
- Figur 2: in schematischer Darstellung eine Draufsicht auf eine beispielhafte erfindungsgemäße Anordnung, bei welcher die Wellenleiterkerne und Kernlängsachsen gekrümmt verlaufen,
- Figur 3: einen Schnitt durch die Anordnung nach Figur 2 längs der Kernlängsachse eines Wellenleiterkerns,
- Figur 4: in schematischer perspektivischer Darstellung eine Anordnung zur Durchführung eines erfindungsgemäßen Verfahrens zur Herstellung einer Schicht auf einer Oberfläche eines Substrats mit einem eine sich ändernde Schichtddicke aufweisenden vorbestimmten Schichtdickenprofil, das zur Herstellung einer Anordnung nach den Figuren 1 bis 3 verwendet werden kann,
- Figur 5: einen innerhalb des Kreises K in Figur 4 befindlichen Ausschnitt dieser Figur in etwas vergrößerter Darstellung, der deutlicher zeigt, wie sich die Schichtdidcke des bereits hergestellten Teils der Schicht verändert, und
- Figur 6: in einem Diagramm eine Verweilzeit in Abhängigkeit vom radialen Abstand von der in Figur 4 gezeigten Drehachse 51 einmal für den Fall der Erzeugung einer konstanten Schichtdicke und für den Fall einer sich linear ändernden Schichtdicke.

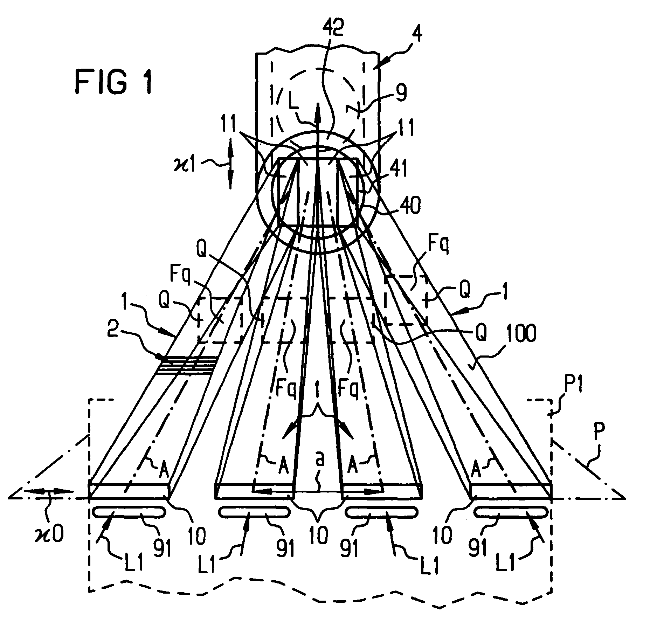

Die in der Fig. 1 schematisch und prinzipiell dargestellte erfindungsgemäße Anordnung dient beispielsweise zur Erzeugung einer Umsetzung von 4 voneinander getrennten Lichtstrahlen L1 jeweils kleineren Strahlquerschnitts q1 in ein Lichtstrahl L eines größeren Strahlquerschnitts q.

Pro Lichtstrahl L1 kleineren Strahlquerschnitts q1 ist je ein optischer Wellenleiterkern 1 vorgesehen, der jeweils eine diesem Lichstrahlenbündel L1 kleineren Strahlquerschnitts q1 zugeordnete länglich ausgebildete Kernendfläche 10 zum Ein- und/oder Auskoppeln von Licht in oder aus diesem Wellenleiterkern 1 aufweist, die in einer zu der den Wellenleiterkernen 1 gemeinsam zugeordneten Ebene P parallelen Richtung r0 langgestreckt ist.

Jeder Wellenleiterkern 1 weist auch eine dem Lichtstrahl L größeren Strahlquerschnitts q zugeordnete Kernendfläche 11 zum Aus- und/oder Einkoppeln von Licht aus oder in diesen Wellenleiterkern 1 sowie eine sich zwischen seinen beiden Kernendflächen 10 und 11 erstreckende Kernlängsachse A und einen Kernquerschnitt Q auf.

Durch eine Kernendfläche 10 oder 11 in einen Wellenleiterkern 1 eingekoppeltes Licht breitet sich in diesem Kern 1 zwischen seinen beiden Kernendflächen 10 und 11 entlang seiner Kernlangsachse A aus und bleibt im wesentlichen innerhalb seines Kernquerschnitts Q.

Erfindungsgemäß ist die dem Lichtstrahl L größeren Strahlquerschnitts q zugeordnete Kernendfläche 11 jedes Wellenleiterkerns 1 jeweils länglich ausgebildet, aber im Vergleich zu der der Richtung r0, in der die dem Lichtstrahl L1 kleineren Strahlquerschnitts q1 zugeordnete Kernendfläche 10 dieses Kerns 1 langgestreckt ist, in einer davon verschiedenen anderen Richtung r1 langgestreckt, und der Kernquerschnitt Q jedes Wellenleiterkerns 1 ändert sich entlang seiner Kernlängsachse A im wesentlichen stufenlos von der geometrischen Form einer Kernendfläche 10 oder 11 in die geometrische Form der anderen Kernfläche 11 bzw. 10.

Bei der Anordnung nach Fig. 1 ist es speziell so eingerichtet, daß die andere Richtung r1, in der die dem Lichtstrahl L größeren Strahlquerschnitts q zugeordnete Kernendfläche 11 jedes Wellenleiterkerns 1 länglich ausgebildet ist, senkrecht zur Ebene P und damit auch zur Richtung r0 ist.

Jeder Lichtstrahl L1 kleineren Strahlquerschnitts q1 kann ein einzelner Lichtstrahl sein oder aus mehreren, beispielsweise von verschiedenen Lichtquellen erzeugten einzelnen Lichtstrahlen bestehen, wobei jeder einzelne Lichtstrahl divergent, konvergent oder zu einem Parallelstrahl kollimiert sein kann. Daß die Lichtstrahlen L1 kleineren Strahlquerschnitts q1 voneinander getrennt sind bedeutet, daß der Abstand zwischen benachbarten solchen Lichtstrahlen L1 größer ist, als ein Abstand zwischen etwa vorhandenen einzelnen Lichtstrahlen innerhalb jedes Lichtstrahls L1, so daß die Lichtstrahlen L1 stets als voneinander getrennt unterschieden werden können.

Der Lichtstrahl L größeren Strahlquerschnitts q1 ist je nachdem, ob ein Abstand zwischen den diesem Lichtstrahl L zugeordneten Kernendflächen 11 der Wellenleiterkerne 1 besteht oder nicht, ein aus mehreren zumindest beim Austritt aus diesen Kernendflächen 11 getrennten einzelnen Lichtstrahln bestehender Lichtstrahl oder als Ganzes ein einzelner Lichtstrahl, der jeweils divergent, konvergent oder zu einem Parallelstrahl kollimiert sein kann.

Der Lichtstrahl L größeren Strahlquerschnitts q ist auch dann als eine Einheit aufzufassen, wenn es aus getrennten einzelnen Lichtstrahlen besteht, wobei aber jeder Abstand zwischen benachbarten solchen Lichtstrahlen kleiner sein muß als der Abstand zwischen benachbarten Lichtstrahlen L1 jeweils kleineren Strahlquerschnitts q1.

Fur die erfindungsgemäße Anordnung selbst bedeutet dies, daß die den Lichtstrahlen L1 kleineren Strahlquerschnitts q1 zugeordneten Kernendflächen 10 der Wellenleiterkerne 1 in einem größeren Achsabstand a als die dem Lichtstrahl L größeren Strahlquerschnitts q zugeordneten Kernendflächen 11 voneinander angeordnet sind.

Bei den Anordnungen nach den Fig. 1 bis 3 ist es speziell so eingerichtet, daß die den Lichtstrahlen L1 kleineren Strahlquerschnitts q1 zugeordneten Kernendflächen 10 in einer zur Richtung r0 ausgerichteten und die den Wellenleiterkernen 1 gemeinsam zugeordnete Ebene P senkrecht schneidenden Anordnungsebene P1 in der Richtung r0 aufeinanderfolgend im gleichen Achsabstand a voneinander angeordnet sind, und daß die dem Lichtstrahl L größeren Strahlquerschnitts q zugeordneten Kernendflächen 11 in einer zur Anordnungsebene P1 parallelen Anordnungsebene P2 angeordnet sind.

In der Anordnungsebene P2 sind vorteilhafterweise die dem Lichtstrahl L größeren Strahlquerschnitts q zugeordneten Kernendflächen 11 in der zu der den Wellenleiterkernen 1 gemeinsam zugeordneten Ebene P parallelen Richtung r0 lückenlos aufeinanderfolgend angeordnet, so daß im Gegensatz zu den herkömmlichen Anordnungen kein Abstand zwischen diesen Kernendflächen 11 besteht.

Der aus diesen lückenlos aneinandergrenzenden Kernendflächen 11 austretende Lichtstrahl L weist einen Strahlquerschnitt q auf, der in Form und Fläche mit der Form und Fläche der lückenlos aneinandergrenzenden Kernendflächen 11 übereinstimmt. Dies läßt sich bei den herkömmlichen Anordnungen nicht erreichen, da dort jede Kernendfläche von einem Wellenleitermantel einer nicht verschwindenden Dicke umgeben ist, die bewirkt, daß die Kernendflächen nicht lückenlos aneinandergrenzen können.

Wie in der Fig. 1 dargestellt, können die dem Lichtstrahl L größeren Strahlquerschnitts q zugeordneten rechteckförmigen Kernendflächen 11 in ihrer zur Richtung r1 parallelen Länge und in ihrer zur Richtung r0 parallelen Breite so bemessen sein, daß sie zusammen eine gemeinsame quadratische Lichtaustrittsfläche bilden, aus welcher der Lichtstrahl L größeren Strahlquerschnitts q als einheitlicher Strahl austritt.

Wenn diese gemeinsame quadratische Austrittsfläche zudem so bemessen ist, daß sie, wie dargestellt, in eine von einem Fasermantel 42 umgebene Kernendfläche 41 des Faserkerns 41 einer Multimodifaser 4, beispielsweise eine Glasfaser, passen, kann vorteilhafterweise der aus allen Kernendflächen 11 austretende Lichtstrahl L durch einfache Stoßkopplung in die Multimodifaser 4 eingekoppelt und in dieser fortgeleitet werden, ohne daß optische Leistungsverluste auftreten. Dies gilt auch für andere Multimodewellenleiter, beispielsweise Wellenleiter in Planartechnik, wobei nur darauf zu achten ist, daß die durch die Kernendflächen 11 der Wellenleiterkerne 1 gegebene gemeinsame Austrittsfläche in Form und Größe der Kernendfläche des Wellenleiterkerns des Multimodiwellenleiters angepaßt ist.

Die stufenlose Änderung des Kernquerschnitts Q jedes Wellenleiterkerns 1 entlang seiner Kernlängsachse A von der geometrischen Form einer Kernendfläche 10 oder 11 in die geometrische Form der anderen Kernfläche 11 bzw. 10 muß so erfolgen, daß die Anzahl der im Wellenleiterkern 1 geführten Moden, d. h., das Modenvolumen, entlang seiner Längsachse A konstant bleibt. Zwar unterscheiden sich die Eigenmoden des Wellenleiterkerns 1 an einer Kernendfläche 10 oder 11 von denen an der anderen Kernenfläche 11 bzw. 10, jedoch kann sich der Übergang sehr langsam vollziehen, wenn die Umfangsfläche 100 des Wellenleiterkerns 1 über ihrem ganzen Umfang eine Neigung von höchstens 1°, vorzugsweise höchstens 0,5° zur Kernlängsachse A aufweist.

Bei den Anordnungen nach den Fig. 1 bis 3 verengt sich jeder Wellenleiterkern 1 parallel zu der den Wellenleiterkernen 1 gemeinsam zugeordneten Ebene P entlang seiner Kernlängsachse A von der dem Lichtstrahl L1 kleineren Strahlquerschnitts q1 zugeordneten Kernendfläche 10 in Richtung zu der dem Lichtstrahl L größeren Strahlquerschnitts q zugeordneten Kernendfläche 11 keilförmig und weitet sich in dieser Richtung senkrecht zu dieser Ebene P auf, so daß der Wellenleiterkern 1 gewissermaßen ein Bisphenoid bildet, wobei der jeweilige Keilwinkel sowohl parallel als auch senkrecht zur Ebene P kleiner oder gleich 1°, vorzugsweise kleiner oder gleich 0,5° ist.

Da durch Modenkonversion ein Energieaustausch zwischen den geführten Moden möglich ist, verteilt sich die geführte Energie längs des Wellenleiterkerns 1 immer wieder auf die sich kontinuierlich ändernden Eigenmoden, so daß Modenmischung auftritt. Im Idealfall bleibt die optische Leistung längs des Wellenleiterkerns 1 konstant.

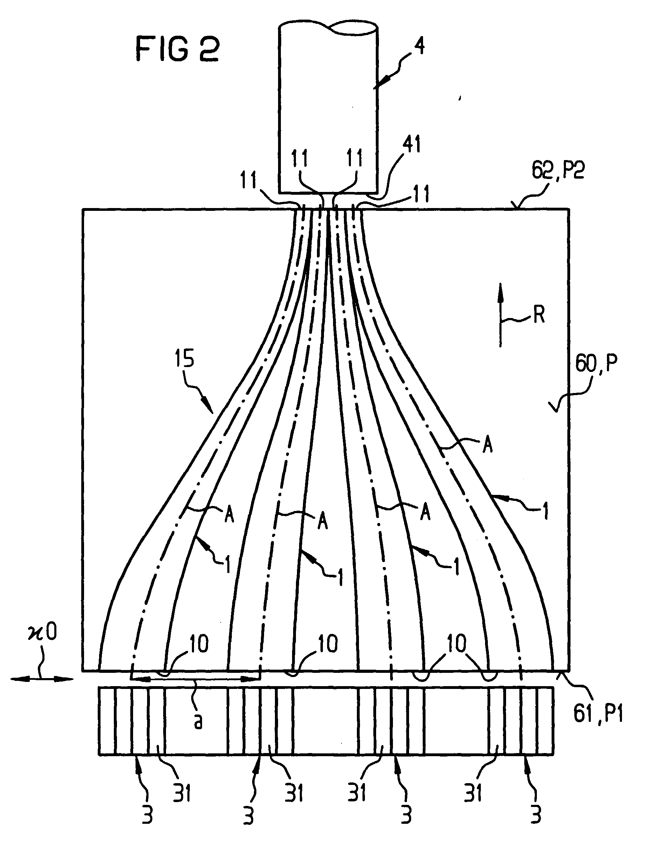

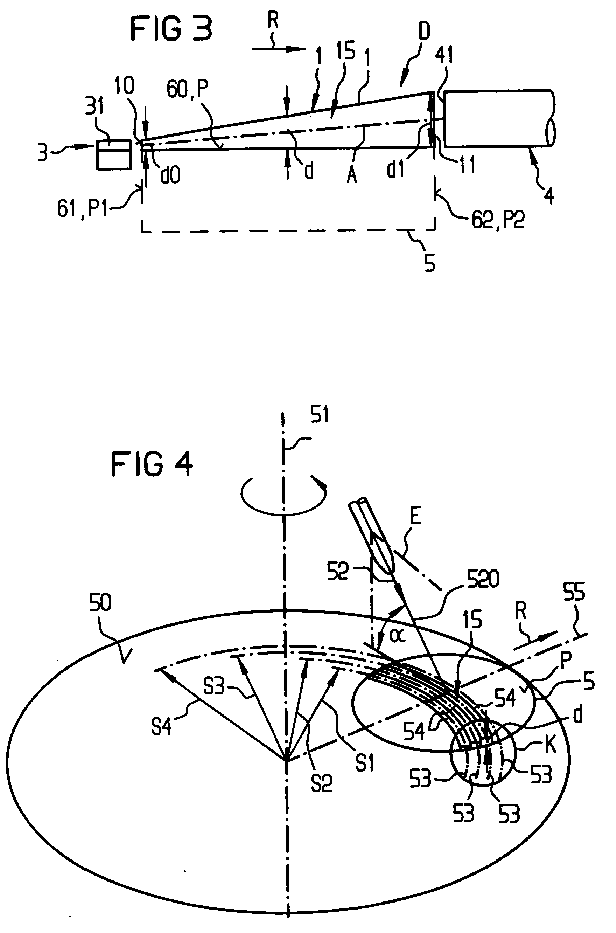

Bei der in den Fig. 2 und 3 dargestellten vorteilhaften Ausgestaltung der erfindungsgemäßen Anordnung sind die den Lichtstrahlen L1 kleineren Strahlquerschnitts q1 zugeordneten Kernendflächen 10 der Wellenleiterkerne 1 mit dem im Vergleich zu den dem Lichtstrahl L größeren Strahlquerschnitts q zugeordneten Kernendflächen 11 der Wellenleiterkerne 1 größeren Achsabstand a quer zu den Kernlängsachsen A voneinander angeordnet, und die Kernlängsachsen A und mit ihnen die Wellenleiterkerne 1 verlaufen zwischen ihren Kernendflächen 10 und 11 derart gekrümmt, beispielsweise S-förmig, daß die Kernlängsachsen A an den dem Lichtstrahl L größeren Strahlquerschnitts q zugeordneten Kernendflächen 11 und auch an den den Lichtstrahlen L1 kleineren Strahlquerschnitts q1 zugeordneten Kernendflächen 10 parallel zueinander sind. Hier besteht der besondere Vorteil, daß sämtliche Kernendflächen 11 und auch 10 senkrecht zu den Kernlängsachsen A angeordnet sein können.

Die Wellenleiterkerne 1 werden generell zweckmäßigerweise so gewählt, daß der Kernquerschnitt Q eines Wellenleiterkerns 1 entlang der Kernlängsachse A eine im wesentlichen konstant bleibende Querschnittsfläche Fq aufweist.

Bei den Ausgestaltungen nach den Fig. 1 bis 3 sind die beiden Kernendflächen 10 und 11 jedes Wellenleiterkerns 1 sind jeweils im wesentlichen langgestreckt rechteckförmig, und der Kernquerschnitt Q dieses Wellenleiterkerns 1 entlang seiner Kernlängsachse A bleibt im wesentlichen rechteckförmig.

Jeder Wellenleiterkern 1 ist vorzugsweise durch einen Kern-Mantel-Wellenleiter , bestehend aus diesem Kern 1 und einem dessen Umfangsfläche 100 umgebenden optischen Mantel aus einem Material mit einer relativ zum Kern 1 kleineren Brechzahl realisiert.

Nach dem vorstehend beschriebenen ist durch die erfindungsgemäße Anordnung ein optischer Strahlumformer in Form eines Arrays von kontradirektional verjüngten Wellenleiterkernen 1 bereitgestellt. Jeder einzelne Wellenleiterkern 1 läuft in der Ebene keilförmig zusammen und weitet sich senkrecht dazu auf (Bisphenoid). Die beiden Keilwinkel jedes Wellenleiterkerns 1 sind dabei so gewählt, daß die Querschnittfläche Fq fde Querschnitts Q dieses Kerns 1 längs der Ausbreitungsrichtung des im Kern 1 geführten Lichts konstant bleibt. Da die Brechzahl jedes Kerns 1 und die Brechzahl des ihn jeweils umgebenden optischen Mediums, beispielsweise der optische Mantel aus dem Material mit der relativ zum Kern kleineren Brechzahl, entlang der Kernlängsachse A konstant sind, ist gewährleistet, daß auch die Anzahl der im Kern 1 geführten Moden, das Modenvorlumen, längs des Kerns 1 konstant bleibt. Zwar unterscheiden sich die Eigenmoden des Kerns 1 an der Eingangsseite von denen an der Ausgangsseite, der Übergang vollzieht sich jedoch sehr langsam, da die Geometrieänderung unter einem Keilwinkel von kleiner oder gleich 1° erfolgt. Da durch Modenkonversion ein Energieaustausch zwischen den geführten Moden möglich ist, verteilt sich die geführte Energie längs des Kerns 1 immer wieder auf die sich kontinuierliche ändernden Eigenmoden um, d.h. es tritt Modenmischung auf. Im Idealfall bleibt daher die Leistung längs des Kerns 1 konstant. Auf der Ausgangsseite des Kerns 1 entsteht so ein Strahlungsfeld, das anders als das Strahlungsfeld an der Eingangsseite des Kerns 1 ausgerichtet ist, beispielsweise vertikal dazu.

Eine an einem Wellenleiterkern 1 vorgesehene Einrichtung 2 zur Erleichterung einer Modenmischung im Kern 1 ist kann beispielsweise dadurch realisiert sein, daß am oder im Wellenleiterkern 1 bzw. einem diesen Kern 1 enthaltenden Kern-Mantel-Wellenleiter herstellungsbedingte Fluktuationen sowohl in der Brechzahl (Schichtaufbau, Körnung) als auch in der Geometrie der Grenzfläche zwischen Kern und Mantel vorhanden sind. Im Unterschied zur sehr gleichmäßigen Glasfaser sind diese Störungen bei planaren Wellenleitern bekanntermaßen besonders ausgeprägt (daher auch seine vergleichsweise hohe Streckendämpfung). Derartige statistische Störungen wie Dickenschwankungen, Brechzahlvariationen oder Krümmungen lassen sich bei der Herstellung auch absichtlich verstärken. Es lassen sich aber auch gezielt regelmäßige Störungen zum Zwecke der Modenmischung aufbringen.

Maßnahmen zur verstärkten Ausbildung der Modenkonversion, die insbesondere bei der später beschriebenen Herstellung besonders eingebracht werden können sind:
- Wellenförmige Korrugation der Begrenzung zwischen Kern 1 und umgebendem Mantel durch rauhes Seitenwand-Ätzen und/oder durch wellenförmige Modulation des Maskenrandes einer bei der Herstellung verwendeten Maske und/oder
- Korrugation oberer und unterer Grenzflächen durch Abscheiden einer rauhen Glasschicht als Unterlage oder Decke oder Aufbringen einer oberen oder unteren Korrugation durch Ätzen von Querrillen.
- Brechzahlfluktuationen werden begünstigt durch besonders dicke, in sich inhomogene Einzelglasschichten, die auch durch Einprägen eines Quergitters durch UV-photochemisch induzierte Reaktionen im Glas, insbesondere zwischen Germanium und gelöstem H2 erzwungen werden können.

12. Verfahren zur Herstellung einer Anordnung nach Anspruch

Bei der in den Fig. 2 und 3 dargestellten Ausgestaltung einer erfindungsgemäßen Anordnung zur Erzeugung einer Umsetzung mehrerer Lichtstrahlen L1 jeweils kleineren Strahlquerschnitts q1 in ein Lichtstrahl L eines größeren Strahlquerschnitts q wird speziell jeder der mehreren Lichtstrahlen L1 des jeweils kleineren Strahlquerschnitts q1 von je einer in der Richtung r0 parallel zu der den Wellenleiterkernen 1 gemeinsam zugeordneten Ebene P sich erstreckenden Zeile 3 aus nebeneinander angeordneten Halbleiterlichtquellen 31 erzeugt und durch die diesem Lichtstrahl L1 kleineren Strahlquerschnitts q1 zugeordnete Kernendfläche 10 des diesem Lichtstrahl L1 zugeordneten Wellenleiterkerns 1 eingekoppelt.

Die dem Lichtstrahl L des größeren Strahlquerschnitts q zugeordneten und in der anderen Richtung r1 langgestreckten Kernendflächen 11 der diesem Lichtstrahl L zugeordneten Wellenleiterkerne 1 sind wie beim Beispiel nach Figur 1 derart in ihrer Lange und Breite bemessen und derart zueinander eng benachbart angeordnet, daß sie im wesentlichen in den Kernendfläche 41 des Wellenleiterkerns 40 eines Multimodewellenleiters 4 passen und daß der aus diesen Kernendflächen 11 der Wellenleiterkerne 1 gemeinsam ausgekoppelte Lichtstrahl L des größeren Strahlquerschnitts q in den Multimodewellenleiter 4 eingekoppelt ist.

Die erfindungsgemäße Anordnung weist folgende Vorteile auf:

Da Brechzahlen von Kern 1 und auch Mantel längs der Kernlängsachse A im Mittel konstant bleiben, kann die numerische Apertur entweder an den Multimodewellenleiter oder an das Lichtquellenstrahlungsfeld angepaßt werden. Somit ist Stoßkopplung möglich. Am jeweiligen anderen Übergang erfolgt die Anpassung über eine Linsenoptik.

Die Anordnung ermöglicht eine besonders hohe Strahlungsdichte, da Mantelflächen und Zwischenräume an dem durch die dem Lichtstrahl L des größeren Strahlquerschnitts q zugeordneten Kernendflächen 11 definierten Aus- und/oder Einkoppelende entfallen können.

Die durch die den Lichtstrahlen L1 jeweils kleineren Strahlquerschnitts q1 zugeordneten Kernendflächen 10 definierte Ein- bzw. Auskoppelseite läßt sich in Geometrie und Akzeptanzwinkel optimal an das Laserarray anpassen.

Alternativ läßt sich die Auskoppelseite in Geometrie und Akzeptanzwinkel optimal an den Multimodewellenleiter anpassen.

Durch Wahl der Fächergeometrie des durch die Wellenleiterkerne gebildeten Fächers und der numerischen Apertur ist die Anpassung an unterschiedliche Laserarrays und Multimodewellenleiter möglich.

Als monolithische Ausbildung in SiO₂-Glas, frei von Verbindungs- und Hilfsmaterialien, ist die Anordnung besonders robust.

Die Anordnung kann in Planartechnik ausgeführt werden, wobei eine kostengünstige Massenproduktion ermöglicht ist.

Bei dieser Ausführung in Planartechnik ist die Anordnung wie in den Figuren 2 und 3 dargestellt auf der vorzugsweise ebenen Oberfläche 60 eines Substrats 5 integriert. Die den Wellenleiterkernen 1 gemeinsam zugeordnete Ebene P ist in diesem Fall zweckmäßigerweise durch die Oberfläche 60 definiert. Die Anordnungsebenen P1 und P2 können durch einander entgegengesetzte Stirn- oder Seitenflächen 61 bzw. 62 definiert sein.

Bei der Herstellung einer auf der Oberfläche P eines Substrats 5 integrierten efindungsgemäßen Anordnung wird so vorgegangen, daß
- auf der Oberfläche P des Substrats 5 eine Schicht 15 aus einem zur Bildung der Wellenleiterkerne 1 vorgesehenen Schichtmaterial derart hergestellt wird, daß diese Schicht 15 eine in einer bestimmten, zur Oberfläche P parallelen Richtung R eine von einer kleineren Schichtdicke d0 im wesentlichen stufenlos auf eine größere Schichtdicke d1 zunimmt, und daß
- diese Schicht 15 derart strukturiert wird, daß auf der Oberfläche P ein oder mehrere, jeweils einen Wellenleiterkern 1 bildende Schichtstreifen entstehen, deren jeder entlang einer Kernlängsachse A von einer die kleinere Schichtdicke d0 aufweisenden und in der zu der den Wellenleiterkernen 1 gemeinsam zugeordneten Ebene P parallelen Richtung r0 langgestreckten und einem Lichtstrahl L1 kleineren Querschnitts q1 zugeordnete Kernendfläche 10 definierenden Schichtendfläche zu einer die größere Schichtdicke d1 aufweisenden Schichtendfläche verläuft, welche die dem Lichtstrahl L größeren Strahlquerschnitts q zugeordnete Kernendfläche 11 dieses Wellenleiterkerns 1 definiert, die in der Richtung r1 der größeren Schichtdicke d1 langgestreckt ist und deren Länge gleich dieser größeren Schichtdicke d1 ist

Bei der Herstellung einer Schicht 15 auf einer Oberfläche P eines Substrats 5 mit einem eine sich ändernde Schichtdicke d aufweisenden vorbestimmten Schichtdickenprofil D wird erfindungsgemäß so vorgegangen daß auf die Oberfläche P ein Materialabscheidungsstrahl 52 zum Abscheiden eines die Schicht 1 bildenden Schichtmaterials gerichtet und die Oberfläche P und Materialabscheidungsstrahl 52 derart relativ zueinander bewegt werden, daß der Materialabscheidungsstrahl 52 vorbestimmte, nebeneinander verlaufender Spuren 53 auf der Oberfläche P durchläuft. Auf jeder vom Materialabscheidungsstrahl 52 durchlaufenen Spur 53 wird ein Streifen 54 aus dem Schichtmaterial mit einer dieser Spur 53 zugeordneten Schichtdicke d abgeschieden. Nach der Abscheidung eines Streifens 54 auf einer Spur 53 durchläuft der Materialabscheidungsstrahl 52 eine andere Spur 53 zur Abscheidung eines Streifens 54 aus dem Schichtmaterial mit einer dieser anderen Spur 53 zugeordneten Schichtdicke d, wobei die den einzelnen Spuren 53 zugeordneten Schichtdicken d so gewählt werden, daß sie zusammen das vorbestimmte Schichtdickenprofil D ergeben.

Bevorzugterweise durchläuft nach der Abscheidung eines Streifens 54 auf einer Spur 53 der Materialabscheidungsstrahl 52 eine dieser einen Spur 53 nächst benachbarte Spur 53 zur Abscheidung eines an den auf der einen Spur 53 abgeschiedenen Streifen 54 grenzenden Streifens 54 aus dem Schichtmaterial mit einer dieser nächst benachbarten Spur 53 zugeordneten Schichtdicke d.

Bevorzugter und vorteilhafterweise werden die Oberfläche P und der Materialabscheidungsstrahl 52 relativ zueinander um eine die Oberfläche P schneidende Drehachse 51 bei verschiedenen radialen Abständen ρ des Materialabscheidungsstrahls 52 von der Drehachse 51 gedreht, so daß der Materialabscheidungsstrahl 52 verschiedene konzentrische kreisbogenförmige Spuren 53 auf der Oberfläche P durchläuft, auf deren jeder ein kreisbogenförmiger Streifen 54 aus dem Schichtmaterial mit der dieser Spur 53 zugeordneten Schichtdicke d abgeschieden wird.

Eine Spur 53 kann zwei oder mehrfach vom Materialabscheidungsstrahl 52 durchlaufen werden und der Materialabscheidungsstrahl 52 durchläuft eine Spur 53 mit einer dieser Spur 53 zugeordneten Geschwindigkeit.

Der Materialabscheidungsstrahl 52 ist bevorzugterweise derart schräg zur Oberfläche P auf eine Spur 53 gerichtet ist, daß eine Strahlachse 520 des Materialabscheidungsstrahls 52 in einer die Spur 53 tangierenden und zur Oberfläche P senkrechten Ebene E liegt und mit der Oberfläche P einen Winkel α kleiner als 90° und größer als 0° einschließt.

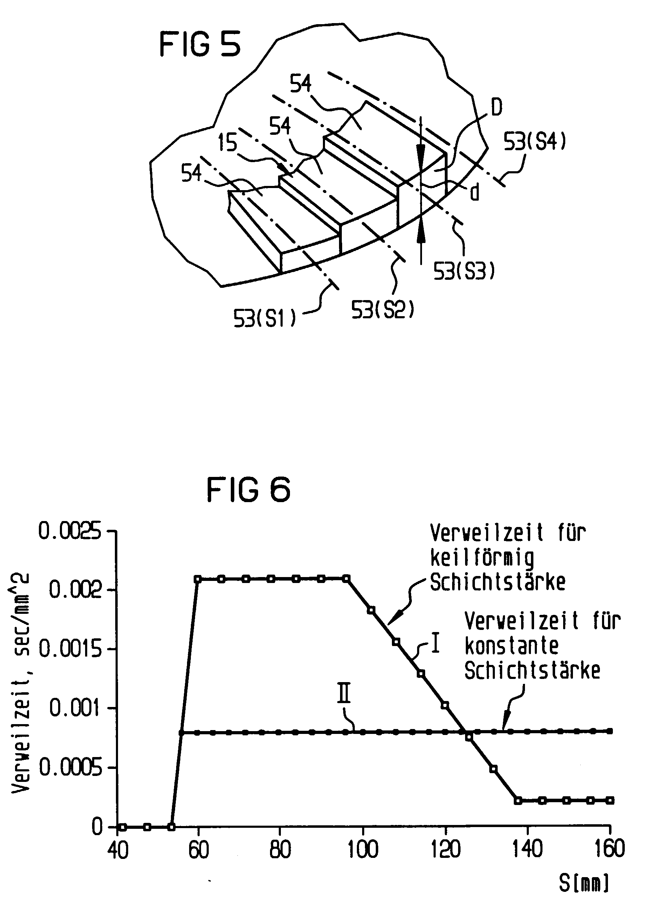

Die beschriebene Herstellung der Schicht 15 basiert auf einem Verfahren, das z.B. bei M. Kawachi und H. W. Schneider beschrieben wurde, hier erstmals zur Herstellung von Schichten 15 mit definiertem Schichtdickenprofil D, insbesonder mit vertikalem Keil eingesetzt wird. Konkret werden planare Substrate, z.B. Silizium-Scheiben mit einer lokalen Düse derart mit SiO₂ bzw. dotiertem SiO₂ beschichtet, daß sich ein Gradient in der Schichtdicke in der gewünschten Weise von typisch 5µm auf 50µm oder von 20µm auf 200µm über beispielsweise 50mm ergibt. Im ersten Fall zielt man auf Laseranpassung, im zweiten Fall auf Faseranpassung. Vorzugsweise wird das Verfahren der hydrolytischen Abscheidung. (Flammenhydrolyse, FHD) verwendet, bei welchem gasförmige Glaspräkursoren , beispielsweise SiC1₄, GeC1₄, BCI₃, PC1₃,TiC1₄ etc., in eine den Materialabscheidungsstrahl 52 definierende schmale Gasflamme injiziert und dort zu den entsprechenden Oxiden hydrolisiert werden, die sich infolge des Temperaturgradienten von der Flamme zum Substrat lokal abscheiden. Durch eine geeignete Relativbewegung wird die Schichtdicke eingestellt. Zum Beispiel kann ein rotierender Teller 50 verwendet werden, auf den sechs oder mehr Scheiben 5 mit gleichem Abstand zur Drehachse 51 aufgelegt werden. Der Brenner ist gegen den Teller geneigt, und die Flamme bestreicht den Teller in tangentialer Richtung so, daß der Masseschwerpunkt der Abscheidung auf einer radialen Linie 55 aufsetzt. Verschiebt man den Aufsetzpunkt oder den Teller in Radialrichtung, so erhalt man eine Abscheidung konstanter Schichtdicke, wenn die Verschiebegeschwindigkeit in der Weise geändert wird, daß die Verweilzeit pro Intervall des abzuscheidenden ringförmigen Streifens 54 konstant bleibt. Ändert man die Verschiebegeschwindigkeit so, daß die Verweilzeit pro Flächenelement des abzuscheidenden Streifens 54 linear anwächst, z.B. von außen nach innen, so erhält man eine keilförmige Schichtdickenvariation. Figur 5 stellt beispielhaft die Verweilzeit pro Fläche für beide Situationen graphisch dar. Die Kurve I stellt die Verweilzeit für eine keilförmige Schicht 15 und Kurve II für eine Schicht konstanter Dicke jeweils in Abhängigkeit vom radialen Abstand ρ von der Drehachse 51 dar.

Bei einer Realisierung wird einer erfindungsgemäßen Anordnung wird zunächst eine untere Mantelschicht mit konstanter Schichtdicke aufgelegt. Dazu können mehrere Einzelfahrten erforderlich sein je nach Düsenstoffdurchsatz und gewünschter Dicke (typisch 10µm). Dann wird die keilförmige Kernschicht 15, wiederum bestehend aus einer Vielzahl von Einzelschichten, mit erhöhter Brechzahl (typisch Δn = 0,025 bei Faseranpassung oder Δn = 0,06 bei Laseranpassung) abgeschieden. Die Brechzahlerhöhung wird in bekannter Weise durch Erhöhung des GeO₂-Gehalts des Glases erzielt. Danach folgt die Konsolidierung des zunächst porösen Glases in einem Ofen bei Temperaturen um 1200°C. Die jetzt hochtransparente Glasschicht wird mit einer Maskenschicht (z.B. organisches Poymer, Silizium, Aluminium, Titan etc.) versehen, die in bekannter Weise photolithographisch zum Fächer strukturiert wird (siehe Figur 2). Die Strukturübertragung erfolgt durch geeignete Ätzverfahren (z.B. Trockenätzen mit CHF₃ im Plasma, siehe H. W. Schneider). Nach der Ätzung der Wellenleiter kann eine weitere Temperaturbehandlung (Verrunden der Kanten) vorteilhaft sein, und zwar zur Erleichterung der Kantenbedeckung bei der nachfolgenden Beschichtung, aber auch zur Verbesserung der Querschnittsanpassung Wellenleiterkern/Multimodewellenleiter. Abschließend wird eine Deckglasschicht mit ähnlichen Parametern wie die Puffer- oder Mantelglasschicht aufgelegt. Auf diese Weise können auf einer Si-Scheibe von 10 cm Durchmesser viele Fächer gleichzeitig hergestellt werden. Nach der Vereinzelung erfolgt die Kantenpolitur und ggf. eine Bedampfung zur Entspiegelung der Endflächen.

## Patentansprüche

1. Anordnung zur Erzeugung
- einer Umsetzung mehrerer voneinander getrennter Lichtstrahlen (L1) jeweils kleineren Strahlquerschnitts (q1) in einen Lichtstrahl (L) eines größeren Strahlquerschnitts (q) und/oder
- einer Umsetzung des Lichtstrahls (L) des größeren Strahlquerschnitts (q) in die mehreren voneinander getrennten Lichtstrahlen (L1) des jeweils kleineren Strahlquerschnitts (q1), wobei
- pro Lichtstrahl (L1) kleineren Strahlquerschnitts (q1)
- je ein optischer Wellenleiterkern (1) vorgesehen ist, der jeweils
- eine diesem Lichtstrahl (L1) kleineren Strahlquerschnitts (q1) zugeordnete länglich ausgebildete Kernendfläche (10) zum Ein- und/oder Auskoppeln von Licht in oder aus diesem Wellenleiterkern (1), die in einer zu einer den Wellenleiterkernen (1) gemeinsam zugeordneten Ebene (P) parallelen Richtung (r0) langgestreckt ist,
- eine dem Lichtstrahl (L) größeren Strahlquerschnitts (q) zugeordnete Kernendfläche (11) zum Aus- und/oder Einkoppeln von Licht aus oder in diesen Wellenleiterkern (1)
- eine sich sich zwischen seinen beiden Kernendflächen (10, 11) erstreckende Kernlängsachse (A) und
- einen Kernquerschnitt (Q) aufweist, wobei sich
- in einen Wellenleiterkern (1) eingekoppeltes Licht in diesem Wellenleiterkern (1) zwischen seinen beiden Kernendflächen (10, 11) entlang seiner Kernlängsachse (A) ausbreitet und im wesentlichen innerhalb seines Kernquerschnitts (Q) bleibt,
**dadurch gekennzeichnet,** daß
- die dem Lichtstrahl (L) größeren Strahlquerschnitts (q) zugeordnete Kernendfläche (11) jedes Wellenleiterkerns (1) jeweils länglich ausgebildet, aber in einer von der Richtung (r0), in der die dem Lichtstrahl (L1) kleineren Strahlquerschnitts (q1) zugeordnete Kernendfläche (10) dieses Wellenleiterkerns (1) langgestreckt ist, verschiedenen anderen Richtung (r1) langgestreckt ist, und daß
- sich der Kernquerschnitt (Q) jedes Wellenleiterkerns (1) entlang seiner Kernlängsachse (A) im wesentlichen stufenlos von der geometrischen Form einer Kernendfläche (10; 11) in die geometrische Form der anderen Kernendfläche (11; 10) ändert.

2. Anordnung nach Anspruch 1,
**dadurch gekennzeichnet,** daß
die dem Lichtstrahl (L) größeren Strahlquerschnitts (q) zugeordneten Kernendflächen (11) der Wellenleiterkerne (1) in einer den Wellenleiterkernen (1) gemeinsam zugeordneten Richtung (r1) langgestreckt sind.

3. Anordnung nach Anspruch 1 oder 2,
**dadurch gekennzeichnet,** daß
- die dem Lichtstrahl (11) größeren Strahlquerschnitts (q) zugeordneten Kernendflächen (11) der Wellenleiterkerne (1) zusammen in einer zur gemeinsamen Ebene (P) senkrechten Anordnungsebene (P2) in einer zur gemeinsamen Ebene (P) parallelen Richtung (r0) lückenlos aufeinanderfolgend angeordnet sind.

4. Anordnung nach einem der vorhergehenden Ansprüche,
**dadurch gekennzeichnet,** daß
- die dem Lichtstrahl (L) größeren Strahlquerschnitts (q) zugeordnete Kernendfläche (11) jedes Wellenleiterkerns (1) senkrecht zur Kernlängsachse (A) dieses Wellenleiterkerns (1) angeordnet ist.

5. Anordnung nach einem der vorhergehenden Ansprüche,
**dadurch gekennzeichnet,** daß
- die den Lichtstrahlen (L1) kleineren Strahlquerschnitts (q1) zugeordneten Kernendflächen (10) der Wellenleiterkerne (1) mit im Vergleich zu den dem Lichtstrahl (L) größeren Strahlquerschnitts (q) zugeordneten Kernendflächen (11) der Wellenleiterkerne (1) größeren Achsabstand (a) voneinander angeordnet sind, und daß
- die Kernlängsachsen (A) und mit ihnen die Wellenleiterkerne (1) zwischen ihren Kernendflächen (10, 11) derart gekrümmt verlaufen, daß die Kernlängsachsen (A)
- an den dem Lichtstrahl (L) größeren Strahlquerschnitts (q) zugeordneten Kernendflächen (11) und/oder
- an den den Lichtstrahlen (L1) kleineren Strahlquerschnitts (q1) zugeordneten Kernendflächen (10)
parallel zueinander sind.

6. Anordnung nach einem der vorhergehenden Ansprüche,
**dadurch gekennzeichnet,** daß die einem Lichtstrahl (L1) kleineren Strahlquerschnitts (q1) zugeordnete Kernendfläche (10) jedes Wellenleiterkerns (1) in einer zur gemeinsamen Ebene (P) senkrechten Anordnungsebene (P1) angeordnet ist.

7. Anordnung nach einem der vorhergehenden Ansprüche,
**dadurch gekennzeichnet,** daß der Kernquerschnitt (Q) eines Wellenleiterkerns (1) entlang der Kernlängsachse (A) eine im wesentlichen konstant bleibende Querschnittsfläche (Fq) aufweist.

8. Anordnung nach einem der vorhergehenden Ansprüche,
**dadurch gekennzeichnet,** daß
- die beiden Kernendflächen (10, 11) eines Wellenleiterkerns (1) jeweils im wesentlichen langgestreckt rechteckförmig sind und
- der Kernquerschnitt (Q) dieses Wellenleiterkerns (1) entlang seiner Kernlängsachse (A) im wesentlichen rechteckförmig bleibt.

9. Anordnung nach einem der vorhergehenden Ansprüche, **dadurch gekennzeichnet,** daß an einem Wellenleiterkern (1) eine Einrichtung (2) zur Erleichterung einer Modenmischung im Wellenleiterkern (1) vorgesehen ist.

10. Anordnung nach einem der vorhergehenden Ansprüche zur Erzeugung einer Umsetzung mehrerer Lichtstrahlen (L1) jeweils kleineren Strahlquerschnitts (q1) in einen Lichtstrahl (L) eines größeren Strahlquerschnitts (q)
**dadurch gekennzeichnet,** daß
- jeder der mehreren Lichtstrahlen (L1) des jeweils kleineren Strahlquerschnitts (q1) von je einer in Richtung (r0) parallel zu der den Wellenleiterkernen (1) gemeinsam zugeordneten Ebene (P) sich erstreckenden Zeile (3) aus nebeneinander angeordneten Halbleiterlichtquellen (31) erzeugt und durch die diesem Lichtstrahl (L1) kleineren Strahlquerschnitts (q1) zugeordnete Kernendfläche (10) des diesem Lichtstrahl (L1) zugeordneten Wellenleiterkerns (1) eingekoppelt ist, und daß
- die dem Lichtstrahl (L) des größeren Strahlquerschnitts (q) zugeordneten und in der anderen Richtung (r1) langgestreckten Kernendflächen (11) der diesem Lichtstrahl (L) zugeordneten Wellenleiterkerne (1) derart in ihrer Länge bemessen und derart zueinander eng benachbart angeordnet sind, daß sie im wesentlichen in den Kernendfläche (41) des Wellenleiterkerns (40) eines Multimodewellenleiters (4) passen, und daß das aus diesen Kernendflächen (11) der Wellenleiterkerne (1) gemeinsam ausgekoppelte Lichtstrahl (L) des größeren Strahlquerschnitts (q) in den Multimodewellenleiter (4) eingekoppelt ist.

11. Anordnung nach einem der vorhergehenden Ansprüche,
**dadurch gekennzeichnet,** daß die den Wellenleiterkernen (1) gemeinsam zugeordnete Ebene (P) durch eine Oberfläche eines Substrats (5) definiert ist, auf der diese Wellenleiterkerne (1) ausgebildet sind.

12. Verfahren zur Herstellung einer Anordnung nach Anspruch 11, **dadurch gekennzeichnet,** daß
- auf der Oberfläche (P) des Substrats (5) eine Schicht (15) aus einem zur Bildung der Wellenleiterkerne (1) vorgesehenen Schichtmaterial derart hergestellt wird, daß diese Schicht (15) eine in einer bestimmten, zur Oberfläche (51) parallelen Richtung (R) eine von einer kleineren Schichtdicke (d0) im wesentlichen stufenlos auf eine größere Schichtdicke (d1) zunimmt, und daß
- diese Schicht (15) derart strukturiert wird, daß auf der Oberfläche (51) ein oder mehrere, jeweils einen Wellenleiterkern (1) bildende Schichtstreifen entstehen, deren jeder
- entlang einer Kernlängsachse (A) von
- einer die kleinere Schichtdicke (d0) aufweisenden und in der zu der den Wellenleiterkernen (1) gemeinsam zugeordneten Ebene (P) parallelen Richtung (r0) langgestreckten und einem Lichtstrahl (L1) kleineren Querschnitts (q1) zugeordnete Kernendfläche (10) definierenden Schichtendfläche zu
- einer die größere Schichtdicke (d1) aufweisenden Schichtendflache verläuft, welche die dem Lichtstrahl (L) größeren Strahlquerschnitts (q) zugeordnet Kernendfläche (11) dieses Wellenleiterkerns (1) definiert, die in der Richtung (r1) der größeren Schichtdicke (d1) langgestreckt ist und deren Länge gleich dieser größeren Schichtdicke (d1) ist

13. Verfahren zur Herstellung einer Schicht (15) auf einer Oberfläche (P) eines Substrats (5) mit einem eine sich ändernde Schichtdicke (d) aufweisenden vorbestimmten Schichtdickenprofil (D),
**dadurch gekennzeichnet**, daß
- auf die Oberfläche (P) ein Materialabscheidungsstrahl (52) zum Abscheiden eines die Schicht (1) bildenden Schichtmaterials gerichtet und die Oberfläche (P) und Materialabscheidungsstrahl (52) derart relativ zueinander bewegt werden, daß
- der Materialabscheidungsstrahl (52) vorbestimmte, nebeneinander verlaufender Spuren (53) auf der Oberfläche (P) durchläuft,
- auf jeder vom Materialabscheidungsstrahl (52) durchlaufenen Spur (53) ein Streifen (54) aus dem Schichtmaterial mit einer dieser Spur (53) zugeordneten Schichtdicke (d) abgeschieden wird, und
- nach der Abscheidung eines Streifens (54) auf einer Spur (53) der Materialabscheidungsstrahl (52) eine andere Spur (53) zur Abscheidung eines Streifens (54) aus dem Schichtmaterial mit einer dieser anderen Spur (53) zugeordneten Schichtdicke (d) durchläuft, wobei
- die den einzelnen Spuren (53) zugeordneten Schichtdicken (d) so gewählt werden, daß sie zusammen das vorbestimmte Schichtdickenprofil (D) ergeben.

14. Verfahren nach Anspruch 13,
**dadurch gekennzeichnet,** daß
nach der Abscheidung eines Streifens (54) auf einer Spur (53) der Materialabscheidungsstrahl (52) eine dieser einen Spur (53) nächst benachbarte Spur (53) zur Abscheidung eines an den auf der einen Spur (53) abgeschiedenen Streifen (54) grenzenden Streifens (54) aus dem Schichtmaterial mit einer dieser nächst benachbarten Spur (53) zugeordneten Schichtdicke (d) durchläuft.

15. Verfahren nach Anspruch 13 oder 14,
**dadurch gekennzeichnet,** daß
- die Oberfläche (P) und der Materialabscheidungsstrahl (52) relativ zueinander um eine die Oberfläche (P) schneidende Drehachse (51) bei verschiedenen radialen Abständen (ρ) des Materialabscheidungsstrahls (52) von der Drehachse (51) gedreht werden, so daß der Materialabscheidungsstrahl (52) verschiedene konzentrische kreisbogenförmige Spuren (53) auf der Oberflache (P) durchläuft, auf deren jeder ein kreisbogenförmiger Streifen (54) aus dem Schichtmaterial mit der dieser Spur (53) zugeordneten Schichtdicke (d) abgeschieden wird.

16. Verfahren nach einem der Ansprüche 13 bis 15,
**dadurch gekennzeichnet,** daß
eine Spur (53) zwei oder mehrfach vom Materialabscheidungsstrahl (52) durchlaufen wird.

17. Verfahren nach einem der Ansprüche 13 bis 16,
**dadurch gekennzeichnet,** daß
der Materialabscheidungsstrahl (52) eine Spur (53) mit einer dieser Spur (53) zugeordneten Geschwindigkeit durchläuft.

18. Verfahren nach einem der Ansprüche 13 bis 17,
**dadurch gekennzeichnet,** daß
der Materialabscheidungsstrahl (52) derart schräg zur Oberfläche (P) auf eine Spur (53) gerichtet ist, daß eine Strahlachse (520) des Materialabscheidungsstrahls (52) in einer die Spur (53) tangierenden und zur Oberfläche (P) senkrechten Ebene (E) liegt und mit der Oberfläche (P) einen Winkel (α) kleiner als 90° und größer als 0° einschließt.
